**Europäisches Patentamt**

**European Patent Office**

**Office européen des brevets**

(19)

(11) Veröffentlichungsnummer: **0 246 234**
**B1**

(12) ## EUROPÄISCHE PATENTSCHRIFT

(45) Veröffentlichungstag der Patentschrift:
20.09.89

(51) Int. Cl.⁴: **C 09 K 17/00, C 08 G 18/28**

(21) Anmeldenummer: **86901059.5**

(22) Anmeldetag: **25.01.86**

(86) Internationale Anmeldenummer:
**PCT/EP 86/00032**

(87) Internationale Veröffentlichungsnummer:
**WO/8604600 (14.08.86 Gazette 86/18)**

(54) **VERFAHREN ZUR VERFESTIGUNG VON GEOLOGISCHEN FORMATIONEN.**

(30) Priorität: **30.01.85 DE 3502997**

(43) Veröffentlichungstag der Anmeldung:
**25.11.87 Patentblatt 87/48**

(45) Bekanntmachung des Hinweises auf die Patenterteilung: **20.09.89 Patentblatt 89/38**

(84) Benannte Vertragsstaaten:
**AT BE CH DE FR IT LI**

(56) Entgegenhaltungen:
**AT–A– 361 426**
**FR–A– 2 279 891**
**US–A– 3 798 186**

(73) Patentinhaber: **Bergwerksverband GmbH**
**Franz-Fischer-Weg 61**
**D-4300 Essen 13 (DE)**

**BAYER AG**
**D-5090 Leverkusen 1 Bayerwerk (DE)**

(72) Erfinder: **MEYER, Frank**
**Potthoffs Börde 22**
**D-4300 Essen 1 (DE)**
Erfinder: **MEHESCH, Hans-Ernst**
**Frillendorfer Höhe 38**
**D-4300 Essen 1 (DE)**
Erfinder: **CORNELY, Wolfgang**
**Wehlingsweg 8**
**D-4390 Gladbeck (DE)**
Erfinder: **MANN, Max**
**Scheurener Str. 109**
**D-5068 Odenthal (DE)**
Erfinder: **KAPPS, Manfred**
**Hoppersheider Weg 55**
**D-5060 Berg.-Gladbach 2 (DE)**

(74) Vertreter: **Schönwald, Karl et al**
**Patentanwälte Schönwald-Fues- von Kreisler-Keller-Selting-Werner Deichmannhaus**
**D-5000 Köln 1 (DE)**

EP 0 246 234 B1

**Beschreibung**

Die vorliegende Erfindung betrifft ein neues Verfahren zur Verfestigung von geologischen Formationen im Untertagebergbau oder im Tiefbau, insbesondere im Steinkohlenbergbau mittels zu Polyurethanen ausreagierenden Reaktionsgemischen auf Basis von organischen Polyisocyanaten und Polyhydroxylverbindungen, wobei spezielle monofunktionelle Alkohole als den Schäumvorgang regulierende Additive eingesetzt werden.

Die Verfestigung geologischer Formationen unter Tage, insbesondere im Steinkohlenbergbau, mit Hilfe von in der Formation aushärtenden, schäumenden Polyurethanen ist bekannt (vgl. z. B. Zeitschrift Glückauf (1968), Seite 666 bis 670 ; Zeitschrift Glückauf (1977), Seiten 707 bis 711 ; Zeitschrift Bergbau (1977), Seiten 124 bis 129 ; DE-PS 1 129 894 : DE-PS 1 758 185, DE-PS 1 784 458, DE-PS 2 436 029, DE-PS 2 623 646 oder DE-PS 3 139 395). Daneben werden derartige zu Polyurethanen reagierende Mischungen auch zum Abdichten gegen Wasser und/oder Gase benutzt.

Nach diesem als Stand der Technik zu betrachtenden Verfahren geht man in der Regel wie folgt vor :

Die beiden Komponenten der Reaktion Polyisocyanat und Polyalkohol (Polyhydroxyl-Komponente) werden separat bis vor ein Bohrloch gefördert, dort kontinuierlich in einem statischen Mischer vereinigt und über das Bohrloch in die Gebirgsformation verpreßt, wo sie unter Aufschäumen erhärten.

Die Polyhydroxylkomponente besteht bei diesen Verfahren des Standes der Technik vorzugsweise aus Abmischungen von Polyetherpolyolen mit Rizinusöl. Hydroxylgruppenhaltige Fettsäurederivate, insbesondere Rizinusöl, erhöhen einerseits die Klebfähigkeit und Haftfestigkeit sowie die Flexibilität der PU-Mischungen. Gleichzeitig wirken diese Polyole als Entschäumer. Dadurch wird ein zu hohes Aufschäumen der Polyurethanharze und damit eine Schwächung der mechanischen Eigenschaften unterdrückt. Üblicherweise wird Rizinusöl in Mengen zwischen 1 und 50 Gew.-%, vorzugsweise 5 bis 20 %, bezogen auf das Polyolgemisch eingesetzt. Damit stellt es einen erheblichen Kostenfaktor dar, insbesondere da die Preise für dieses Naturprodukt starken Schwankungen unterworfen sind und im Mittel erheblich über den Preisen der anderen Polyole liegen. Außerdem ist es als Naturprodukt starken Schwankungen hinsichtlich der Qualität unterworfen. Deshalb bestand ein Bedürfnis nach einer Ersatzlösung, die unter Wahrung der o.a. vorteilhaften Effekte die beschriebenen Nachteile nicht aufweist.

Überraschenderweise wurde gefunden, daß durch Einsatz geringer Mengen monofunktioneller Alkohole die geschilderten Nachteile nicht nur vermieden werden können, sondern auch die anwendungstechnischen Eigen schaften des Polyurethans verbessert werden können.

Gegenstand der Erfindung ist daher ein Verfahren zur Verfestigung von geologischen Formationen im Untertagebergbau oder im Tiefbau durch Einbringen von zu Polyurethanen ausreagierenden Reaktionsgemischen, die aus einer Polyisocyanatkomponente a), einer Polyolkomponente b) und gegebenenfalls Hilfs- und Zusatzmitteln c) bestehen, in die zu verfestigende Formation, dadurch gekennzeichnet, daß man als Polyolkomponente b) Abmischungen aus (i) organischen Polyhydroxylverbindungen des Hydroxylzahlbereichs 100 bis 800 und (ii) einwertigen Alkoholen des Molekulargewichtsbereichs 32 bis 600 verwendet, wobei die Menge der Komponente (ii) 0,01 bis 20 Gew.-%, bezogen auf die Gesamtkomponente b), beträgt.

Bei der beim erfindungsgemäßen Verfahren einzusetzenden Polyisocyanatkomponente a) handelt es sich vorzugsweise um Polyphenylen-polymethylen-polyisocyanate, wie sie durch Anilin/Formaldehydkondensation und anschließende Phosgenierung hergestellt werden (« polymeres MDI ») oder um Carbodiimid-, Biuret-, Urethan- und/oder Allophanatgruppen aufweisende, bei Raumtemperatur flüssige Derivate dieser Polyisocyanate. Die bei Raumtemperatur flüssigen, durch Phosgenierung von Anilin/Formaldehyd-Kondensaten erhaltenen Polyisocyanatgemische (« polymeres MDI »), sowie deren flüssige, NCO-Gruppen aufweisende Umsetzungsprodukte mit unterschüssigen Mengen (NCO/OH-Molverhältnis = 1 :0,005 bis 1 : 0,3) mehrwertiger Alkohole des Molekulargewichtsbereiches 62 bis 3 000, insbesondere Ethergruppen aufweisender Polyole des Molekulargewichtsbereichs 106 bis 3 000 sind bevorzugt. Bei Raumtemperatur flüssige Gemische aus 2,4'- und 4,4'-Diisocyanatodiphenylmethan sind ebenfalls als Polyisocyanatkomponente a) geeignet. Grundsätzlich kommen erfindungsgemäß aber auch andere organische Polyisocyanate, wie sie z. B. aus der DE-OS 28 32 253, Seite 10 und 11, bekannt sind, in Frage. Ganz besonders bevorzugt werden Polyisocyanatgemische der Diphenylmethanreihe einer Viskosität bei 25 °C von 50 bis 500 mPa.s mit einem NCO-Gehalt von ca. 30 bis 32 Gew.% eingesetzt.

Bei der Polyolkomponente b) handelt es sich um Gemische aus (i) organischen Polyhydroxylverbindungen des OH-Zahlbereichs 100 bis 800, vorzugsweise 250 bis 400 mit (ii) einwertigen Alkoholen.

Bei den Polyhydroxylverbindungen (i) handelt es sich vorzugsweise um die aus der Polyurethanchemie an sich bekannten Polyetherpolyole bzw. um Gemische verschiedener derartiger Polyetherpolyole. Im Falle der Verwendung von Gemischen verschiedener Polyhydroxylverbindungen beziehen sich die gemachten Angaben bezüglich der Hydroxylzahl auf diese Gemische. Dies bedeutet, daß einzelne Komponenten der Gemische auch eine außerhalb der genannten Bereiche liegende Hydroxylzahl aufweisen können. Gut brauchbare Polyetherpolyole sind beispielsweise die Propoxylierungsprodukte von zwei- bis achtwertigen Startermolekülen wie beispielsweise Wasser, 1,2-Dihydroxypropan, Trimethylolpropan, Pentaerythrit, Glycerin, Sorbit, Ethylendiamin und gegebenenfalls Rohrzucker. Im allgemeinen weist die Komponente (i) eine mittlere Hydroxylfunktionalität von 2,0 bis 5,0, vorzugsweise 2,0 bis 3 auf.

EP 0 246 234 B1

Geeignete derartige Gemische können beispielsweise dadurch erhalten werden, daß man entsprechende Gemische von Startermolekülen der beispielhaft genannten Art einer Propoxylierungsreaktion unterzieht. Es ist jedoch auch möglich, separat hergestellte Polyhydroxypolyether nach ihrer Herstellung miteinander zur erfindungsgemäß einzusetzenden Komponente (i) abzumischen.

Bei der Komponente (ii) handelt es sich um beliebige einwertige Alkohole mit einer primären, sekundären oder tertiären Hydroxylgruppe des Molekulargewichtsbereichs 32 bis 600, vorzugsweise 60 bis 150. Auch bei der Komponente (ii) kann es sich um Gemische verschiedener einwertiger Alkohole handeln. Die genannten Molekulargewichtsangaben beziehen sich in diesem Falle auf die statistischen Durchschnittswerte. Geeignete einwertige Alkohole sind beispielsweise Methanol, Ethanol, n-Propanol, Isopropanol, n-Butanol, Isobutanol, t-Butanol, n-Pentanol, 1-Methyl-1-hydroxy-butan, n-Hexanol, 2-Methyl-1-hydroxy-pentan, 2-Ethyl-1-hydroxyhexan, n-Dodecanol, n-Octadecanol, technische Fettalkohole bzw. ihre Gemische mit bis zu ca. 40 Kohlenstoffatomen, Cyclohexanol oder Benzylalkohol. t-Butanol und i-Butanol sind besonders bevorzugt. Beliebige Gemische derartiger einwertiger Alkohole können selbstverständlich auch eingesetzt werden. In der Komponente b) liegen die einwertigen Alkohole (ii) in einer Menge von 0,01 bis 20, vorzugsweise 0,1 bis 5 Gew.-%, bezogen auf das Gesamtgewicht der Komponente b), vor. Bei den gegebenenfalls mitzuverwendenden Hilfs- und Zusatzmitteln c) handelt es sich beispielsweise um folgende :

c1) Wasser, welches in einer Menge von bis zu 5, vorzugsweise bis zu 4 Gew.-%, bezogen auf das Gewicht der Komponente b) mitverwendet werden kann.

c2) Katalysatoren für die Isocyanat-Additionsreaktion wie insbesondere zinnorganische Verbindungen wie Zinn (II) octoat oder Dibutylzinndilaurat oder tert.-Amine wie N,N-Dimethylbenzylamin oder Triethylendiamin. Diese Katalysatoren werden im allgemeinen in einer Menge von bis zu 2 Gew.-%, vorzugsweise in einer Menge von 0,3 bis 1 Gew.-%, bezogen auf das Gesamtgemisch mitverwendet.

c3) Organische Treibmittel wie z. B. Trichlormonofluormethan oder Dichlordifluormethan oder auch Methylenchlorid.

c4) Schaumregulatoren wie z. B. die hierfür bekannten Polyetherpolysiloxane.

Weitere gegebenenfalls mitzuverwendende Hilfs- und Zusatzmittel sind Flammschutzmittel (z. B. Phosphorsäure-Derivate), organische oder anorganische Füllstoffe (z. B. Harnstoff, Calciumcarbonat, Glimmer oder Talk).

In den beim erfindungsgemäßen Verfahren einzusetzenden Reaktionsgemischen liegen die einzelnen Komponenten im übrigen in einer solchen Menge vor, die einer Isocyanat-Kennzahl von 90 bis 150, vorzugsweise 120 bis 140 entsprechen. Unter « Isocyanatkennzahl » ist hierbei der Quotient aus der Anzahl der im Reaktionsgemisch vorliegenden Isocyanatgruppen geteilt durch die Anzahl der im Reaktionsgemisch vorliegenden, gegenüber Isocyanatgruppen reaktionsfähigen Gruppen, multipliziert mit 100, zu verstehen, wobei Wasser als difunktionelle Verbindung in die Berechnung eingeht.

Vor der Durchführung des erfindungsgemäßen Verfahrens werden im allgemeinen die gegebenenfalls mitzuverwendenden Hilfs- und Zusatzmittel c) mit der Polyolkomponente b) vereinigt, worauf sich eine Verarbeitung nach dem Zweikomponenten-Prinzip anschließt. Dies bedeutet, daß zur Herstellung der Reaktionsgemische die Polyisocyanat-Komponente a) mit der Polyolkomponente b) bzw. dem Gemisch aus Polyolkomponente b) und den Hilfs- und Zusatzmitteln c) intensiv durchmischt wird. Hierzu können die an sich bekannten Mischaggregate des Standes der Technik verwendet werden.

Die Durchführung des erfindungsgemäßen Verfahrens erfolgt im übrigen nach den bekannten Methoden des Standes der Technik, indem man in die zu verfestigenden Formationen eine Vielzahl von Löchern einer Tiefe von ca. 2 bis 6 m und eines Durchmessers von ca. 20 bis 60 mm bohrt und in diese die erfindungsgemäßen Gemische einbringt. In der Regel verschließt man die Bohrlöcher mittels eines Bohrlochverschlusses mit einer Durchführung, durch die über ein Rohr die Reaktionsmischung injiziert werden kann, wobei ein in der Durchführung enthaltenes Rückschlagventil das Bohrloch nach Abschluß der Injektion gegen Wiederausfließen der Reaktionsmischung sichert. Das Injizieren kann mit Drücken bis über 100 bar erfolgen, zu hohe Drücke können indessen zum Ausbrechen von Kohle oder Gestein führen.

Prinzipiell ist es auch möglich, bei der Durchführung des erfindungsgemäßen Verfahrens nach dem Prinzip der US-PS 3 698 196 zu verfahren, wobei die Polyisocyanat-Komponente a) einerseits und die Polyolkomponente b) und die gegebenenfalls mitverwendeten Hilfs- und Zusatzmittel c) andererseits unter Beachtung der obengenannten Isocyanatkennzahl in die Patronen einer Zweikammer-Patrone gefüllt werden, die dann in das vorgefertigte Bohrloch eingebracht und dort zur Vermischung der beiden Komponenten mechanisch zertrümmert wird. Nach der Zertrümmerung der Patrone wird das Bohrloch verschlossen. Diese Verfahrensweise ist jedoch gegenüber der erstgenannten Verfahrensweise weniger bevorzugt.

Nach dem Verschließen der Bohrlöcher und Einbringen des flüssigen Harzes dringt das vorzugsweise aufschäumend erhärtende Gemisch unter dem eingenen Schäumdruck in die zu verfestigenden Formationen ein und füllt gleichzeitig auch das Bohrloch vollständig aus. Die resultierenden Polyurethankunststoffe, insbesondere -schaumstoffe bewirken aufgrund ihrer ausgezeichneten Haftung an der Kohle bzw. dem Nebengestein und aufgrund ihrer ausgezeichneten mechanischen Eigenschaften eine nachhaltige Verfestigung der zu verfestigenden geologischen Formation.

Durch die erfindungswesentliche Maßnahme der Mitverwendung der einwertigen Alkohole (ii) wird erreicht, daß das zu Anfang der Reaktion entstehende Kohlendioxid nicht zur Bildung des resultierenden

3

Schaumes beiträgt, sondern — gegebenenfalls nach zwischenzeitlichem Aufschäumen und anschließendem Kollabieren der Schaumstruktur noch in der Flüssigphase — ausgast und damit sozusagen « verkocht ». Erst in der Endphase der Reaktion kommt es zu dem dann meist erwünschten Aufschäumen und zur Ausbildung der endgülten, vorzugsweise groben Schaumstruktur. Ein Arbeiten ohne die erfindungswesentlichen Zusätze würde bewirken, daß bereits in der Anfangsphase der Reaktion ein Aufschäumen stattfindet, welches zu Schaumstrukturen mit einer inhomogenen Dichteverteilung führt, welche in weiten Bereichen eine zu geringe Dichte und damit zu schlechte mechanische Eigenschaften aufweisen. Bei dem genannten Aufschäumen in der späteren Reaktionsphase tritt eine derartige, unerwünschte unterschiedliche Dichte der Schaumstoffe nicht mehr auf, so daß stets Schaumstoffe einer homogenen Dichte und damit mit homogenen mechanischen Eigenschaften resultieren. Die erfindungswesentlichen einwertigen Alkohole erweisen sich diesbezüglich als wesentlich effektiver als das für den gleichen Zweck bislang eingesetzt Rizinusöl. Im übrigen ist die erfindungsgemäße Verwendung von einwertigen Alkoholen im allgemeinen mit dem Vorteil verbunden, daß die Viskosität der zum Einsatz gelangenden Polyolkomponente b) niedriger liegt als eine entsprechende, keine einwertigen Alkohole aufweisende Polyolkomponente. Hierdurch wird die Fähigkeit des Reaktionsgemischs, auch in kleine Risse der zu verfestigenden Formation einzudringen, verbessert.

Die nachfolgenden Beispiele dienen der weiteren Erläuterung des erfindungsgemäßen Verfahrens. Alle Prozentangaben beziehen sich auf Gewichtsprozente.

## Beispiele

In den nachstehenden Beispielen werden folgende Ausgangskomponenten eingesetzt :

Polyetherpolyol I, hergestellt aus einem Gemisch aus Saccharose und 1,2-Propandiol im Molverhältnis 1 : 5 und Propylenoxid mit einer OH-Zahl von 380 und einer Viskosität von 580 mPa·s bei 25 °C.

Polyetherpolyol II, hergestellt aus Glycerin und Propylenoxid mit einer OH-Zahl von 380 und einer Viskosität von 450 mPa·s bei 25 °C.

Polyetherpolyol III, hergestellt aus 1,2-Propandiol und Propylenoxid mit einer OH-Zahl von 110 und einer Viskosität von 105 mPa·s bei 25 °C.

Polyetherpolyol IV, hergestellt aus 1,2-Propandiol und Propylenoxid mit einer OH-Zahl von 284 und einer Viskosität von 75 mPa·s bei 25 °C.

Rizinusöl I, 1. Pressung, mit einer Jodzahl von 87,2, einer OH-Zahl von 158, einem Wassergehalt von 0,14 % und einer Viskosität von 678 mPa·s bei 25 °C.

Rizinusöl II, 1. Pressung, mit einer Jodzahl von 88,5, einer OH-Zahl von 149 ; einem Wassergehalt von 0,21 % und einer Viskosität von 670 mPa·s bei 25 °C.

Polymeres MDI, ein durch Phosgenierung eines Formaldehyd-Anilin-Kondensats erhaltenes Isocyanat, das zu ca. 60 % aus Diisocyanatodiphenylmethan besteht, mit einem NCO-Gehalt von 31 Gew.-% und einer Viskosität von 140 mPa·s bei 25 °C.

## Beispiel 1 (Vergleichsbeispiel)

In einem nicht gewachsten Papp-Becher wurden 100 g Polyolmischung der unten angegebenen Zusammensetzung mit 120 g polymerem MDI mit einem flachen Holzstab 60 Sekunden von Hand innig verrührt. Danach wurde das Gemisch in eine vertikal hängende, unten geschlossene Polyamid-Schlauchfolie (Umfang 134 mm) gegossen. Die Füllhöhe des noch nicht Gas-entwickelnden, flüssigen Reaktionsgemisches wird gleich 1 gesetzt und dient als Bezugsmaß für die zu beobachtende Expansion. Die Expansion wird als Vielfaches der Füllhöhe angegeben und als « Schäumfaktor » bezeichnet. Eine Volumenzunahme um 100 % wird demnach mit Schäumfaktor 2,0 charakterisiert.

Polyolmischung :

| | |
|---|---|
| Polyetherpolyol I | 70,7 g |
| Polyetherpolyol IV | 28,3 g |
| Wasser | 1,0 g |

Schäumfaktor = 2,9

Der Schaum ist aufgeschwommen und hat sich deutlich von einer darunterliegenden, weniger stark geschäumten Phase separiert (Rohdichte-Sprung). Die Erfahrung hat gezeigt, daß solche Effekte auf ungenügende Festigkeit — mangels Masse — im oberen Bereich hindeuten. Solche Fomulierungen versagen beim Einsatz unter Tage.

## Beispiel 2 (Stand der Technik)

Polyolmischung :

| | |
|---|---|
| Polyetherpolyol I | 63,9 g |

| | |
|---|---|
| Polyetherpolyol IV | 25,5 g |
| Rizinusöl I | 9,6 g |
| Wasser | 1,0 g |

Schäumfaktor — 1,9

Das Material ist gleichmäßig durch Blasen aufgetrieben. Ein Rohdichte-Sprung ist nicht erkennbar. Solche Reaktionsmassen haben sich im Einsatz unter Tage seit vielen Jahren bewährt.

## Beispiel 3 (erfindungsgemäß)

Verfahren wie in Beispiel 1 beschrieben.

Polyolmischung :

| | |
|---|---|
| Polyetherpolyol I | 68,3 g |
| Polyetherpolyol IV | 27,3 g |
| i-Amylalkohol | 3,4 g |
| Wasser | 1,0 g |

Schäumfaktor : 2,0

Das Reaktionsprodukt sieht aus wie in Beispiel 2 beschrieben.

## Beispiel 4 (erfindungsgemäß)

Verfahren wie in Beispiel 1 beschrieben.

Polyolmischung :

| | |
|---|---|
| Polyetherpolyol I | 68,3 g |
| Polyetherpolyol III | 16,5 g |
| Polyetherpolyol IV | 10,8 g |
| i-Amylalkohol | 3,4 g |
| Wasser | 1,0 g |

Schäumfaktor = 2,1

Das Reaktionsprodukt sieht aus wie in Beispiel 2 beschrieben.

## Beispiel 5 (erfindungsgemäß)

Verfahren wie in Beispiel 1 beschrieben.

Polyolmischung :

| | |
|---|---|
| Polyetherpolyol I | 70,2 g |
| Polyetherpolyol IV | 28,1 g |
| sek.-Butanol | 0,7 g |
| Wasser | 1,0 g |

Schäumfaktor = 1,7

Das Reaktionsprodukt sieht aus wie in Beispiel 2 beschrieben.

## Beispiel 6 (erfindungsgemäß)

Verfahren wie in Beispiel 1 beschrieben.

Polyolmischung :

| | |
|---|---|
| Polyetherpolyol I | 70,2 g |
| Polyetherpolyol IV | 28,1 g |

| | |
|---|---|
| tert.-Butanol | 0,7 g |
| Wasser | 1,0 g |

Schäumfaktor : 1,8

Das Reaktionsprodukt sieht aus, wie in Beispiel 2 beschrieben.

### Beispiel 7 (Vergleich)

Verfahren ähnlich der Beschreibung in Beispiel 1. Die Rührzeit beträgt aber nur 30 Sekunden (statt 60 Sekunden).

Polyolmischung :

| | |
|---|---|
| Polyetherpolyol II | 71,0 g |
| Polyetherpolyol IV | 28,4 g |
| Dibutylzinndilaurat (DBTL) | 0,3 g |
| Wasser | 0,3 g |

Schäumfaktor = 2,5

Das Reaktionsprodukt zeigt einen Rohdichte-Sprung, wie in Beispiel 1 beschrieben.

### Beispiel 8 (Stand der Technik)

Verfahren wie in Beispiel 7 beschrieben.

Polyolmischung :

| | |
|---|---|
| Polyetherpolyol II | 64,2 g |
| Polyetherpolyol IV | 25,6 g |
| Rizinusöl | 9,6 g |
| DBTL | 0,3 g |
| Wasser | 0,3 g |

Schäumfaktor = 1,6

Das Produkt sieht gleichmäßig aus, ähnlich wie in Beispiel 2 beschrieben.

### Beispiel 9 (erfindungsgemäß)

Verfahren wie in Beispiel 7 beschrieben.

Polyolmischung :

| | |
|---|---|
| Polyetherpolyol II | 70,5 g |
| Polyetherpolyol IV | 28,2 g |
| Mischung gesättigter und ungesättigter Fettalkohole (Alfol) von C14 bis C22 | 0,7 g |
| DBTL | 0,3 g |
| Wasser | 0,3 g |

Schäumfaktor = 1,4

Das Produkt sieht gleichmäßig aus, ähnlich wie in Beispiel 2 beschrieben.

### Beispiel 10 (erfindungsgemäß)

Verfahren wie in Beispiel 7 beschrieben.

Polyolmischung :

| | |
|---|---|
| Polyetherpolyol I | 34,3 g |
| Polyetherpolyol II | 34,3 g |
| Polyetherpolyol IV | 27,4 g |

| | |
|---|---|
| 2-Ethyl-1-hexanol | 3,4 g |
| DBTL | 0,3 g |
| Wasser | 0,3 g |

Schäumfaktor = 1,4

Das Produkt sieht gleichmäßig aus, ähnlich wie in Beispiel 2 beschrieben.

### Beispiel 11 (erfindungsgemäß)

Verfahen wie in Beispiel 7 beschrieben.

Polyolmischung :

| | |
|---|---|
| Polyetherpolyol I | 70,5 g |
| Polyetherpolyol IV | 28,2 g |
| Benzylalkohol | 0,7 g |
| DBTL | 0,3 g |
| Wasser | 0,3 g |

Schäumfaktor = 1,7

Das Produkt sieht gleichmäßig aus, ähnlich wie in Beispiel 2 beschrieben.

### Beispiel 12 (erfindungsgemäß)

Verfahren wie in Beispiel 7 beschrieben.

Polyolmischung :

| | |
|---|---|
| Polyetherpolyol I | 70,5 g |
| Polyetherpolyol IV | 28,2 g |
| iso-Propanol | 0,7 g |
| DBTL | 0,3 g |
| Wasser | 0,3 g |

Schäumfaktor = 1,5

Das Produkt sehr gleichmäßig aus, ähnlich wie in Beispiel 2 beschrieben.

### Beispiel 13 (erfindungsgemäß)

Verfahren wie in Beispiel 7 beschrieben.

Polyolmischung :

| | |
|---|---|
| Polyetherpolyol II | 70,5 g |
| Polyetherpolyol IV | 28,2 g |
| 1,1-Dimethylallyl-alkohol | 0,7 g |
| DBTL | 0,3 g |
| Wasser | 0,3 g |

Schäumfaktor = 1,5

Das Produkt sieht gleichmäßig aus, ähnlich wie in Beispiel 2 beschrieben.

### Beispiel 14 (erfindungsgemäß)

Verfahren wie in Beispiel 7 beschrieben.

Polyolmischung :

| | |
|---|---|
| Polyetherpolyol I | 70,5 g |
| Polyetherpolyol IV | 28,2 g |
| tert.-Butanol | 0,7 g |

| DBTL | 0,3 g |
| Wasser | 0,3 g |

Schäumfaktor = 1,5

Das Produkt sieht gleichmäßig aus, ähnlich wie in Beispiel 2 beschrieben.

Beispiel 15 (erfindungsgemäß)

Verfahren wie in Beispiel 7 beschrieben.

Polyolmischung :

| Polyetherpolyol I | 70,5 g |
| Polyetherpolyol IV | 28,2 g |
| Methanol | 0,7 g |
| DBTL | 0,3 g |
| Wasser | 0,3 g |

Schäumfaktor = 1,4

Das Produkt sieht gleichmäßig aus, ähnlich wie in Beispiel 2 beschrieben.

Beispiel 16

In einem Walzenstreb von 220 m Länge und mit 1,70 m geschnittener Mächtigkeit, versehen mit einem Vierstempel-Schildausbau, böschte in zwei Bereichen von 10 bis 18 m Länge immer wieder Kohle ab, so daß in der Folge Hangendausbrüche von bis zu 7 m Länge und 4 m Höhe entstanden.

Zur Verfestigung des Kohlenstoßes wurden im Abstand von 5 m insgesamt sieben 4,5 m lange Bohrlöcher (Durchmesser : 45 mm) in ca. 1,30 m Höhe in den Kohlenstoß gebohrt und analog, versetzt dazu, sechs Bohrlöcher mit ca. 20 gon Ansteigen ins Hangende. In diese wurden mittels der üblichen Verpreßeinrichtung (Zweikomponentenpumpe, statische Mischeinheiten, Bohrlochverschluß) eine Reaktionsmischung gemäß Beispiel 6 injiziert. Die Harzaufnahme betrug rund 73 kg in der Kohle und 53 kg im Hangenden. Ausbrüche traten in den verpreßten Bereichen nicht mehr auf.

Beispiel 17

Ein Walzenstreb mit 1,60 m geschnittener Mächtigkeit, 240 m Länge und 15 gon Einfallen mit einem Bergemittel im unteren Bereich zwischen 30 und 60 cm, ausgerüstet mit Vierstempelschilden, durchlief mehrere Störungszonen, die ständig zu Hangendausbrüchen von bis zu 15 m Länge und 8 m Höhe führten. Einige Zonen wiesen nasse Stellen auf, in der Fußstrecke wurde eine Wassermenge von 60 l/min aus dem Streb gemessen.

Während drei aufeinanderfolgender Nachtschichten wurden jeweils im Bereich A (Schild 80-120) im Abstand von 5 m neun 4,5 m lange Löcher (Durchmesser : 45 mm) in ca. 1,40 m Höhe in den Kohlenstoß gebohrt, ebenso acht 4,50 m lange Löcher mit ca. 15 gon Ansteigen in das Hangende. Die Bohrlöcher wurden mit Beschickungseinheiten versehen und über eine Zweikomponentenpumpe mit nachgeschaltetem Statikmischer mit einem Reaktionsgemisch gemäß Beispiel 7 verpreßt. Die Harzaufnahme lag bei durchschnittlich 92 kg in der Kohle und 68 kg im Hangenden.

Ebenso wurde der Bereich B injiziert (Schild 121-160), wobei ein Reaktionsgemisch gemäß Beispiel 8 verwendet wurde. Die Bohrlöcher nahmen in der Kohle im Mittel 89 kg und 58 kg im Hangenden auf.

Während der folgenden drei Nachtschichten wurde der Bereich A wie vorhin Bereich B verfestigt ; im Bereich B wurde stattdessen ein Reaktionsgemisch gemäß Beispiel 14 verwendet. Die mittlere Harzaufnahme pro Bohrloch ging dabei geringfügig zurück auf 88 kg in der Kohle und 65 kg im Hangenden (Bereich A) bzw. 87 kg in der Kohle und 57 kg im Hangenden (Bereich B).

In den nächsten drei Nächten wurden wiederum Bereich A wie vorhin Bereich B und umgekehrt verfestigt. Die Harzaufnahme pro Bohrloch betrug für Bereich A 87 kg in der Kohle und 68 kg im Hangenden, für Bereich B 86 kg in der Kohle und 59 kg im Hangenden.

Während der ersten drei Tage traten im nach Beispiel 7 verfestigten Bereich A vereinzelt Ausbrüche bis zu 2 m Höhe an feuchten Stellen auf, in den Ausbrüchen konnte hochaufgeschäumtes, relativ sprödes Harz gefunden werden. In den nach Beispiel 8 injizierten Bereichen traten insgesamt während der neun Tage sieben Ausbrüche mit maximal 1 m Höhe auf. Hier konnte ebenfalls hochaufgeschäumtes, sprödes Harz beobachtet werden. Mit Beispiel 14 war während der sechs Tage des Einsatzes nur ein kleinerer Ausbruch von 3 m Länge und maximal 1 m Höhe zu verzeichnen.

**Patentansprüche**

1. Verfahren zur Verfestigung von geologischen Formationen im Untertagebergbau oder im Tiefbau durch Einbringen von zu Polyurethanen ausreagierenden Reaktionsgemischen, die aus einer Polyisocyanatkomponente a), einer Polyolkomponente b) und gegebenenfalls Hilfs- und Zusatzmitteln c) bestehen, in die zu verfestigende Formation, dadurch gekennzeichnet, daß man als Polyolkomponente b) Abmischungen aus (i) organischen Polyhydroxylverbindungen des Hydroxylzahlbereichs 100 bis 800 und (ii) einwertigen Alkoholen des Molekulargewichtsbereichs 32 bis 600 verwendet, wobei die Menge der Komponente (ii) 0,01 bis 20 Gew.%, bezogen auf die Gesamtkomponente b), beträgt.

2. Verfahren gemäß Anspruch 1, dadurch gekennzeichnet, daß man als einwertige Alkohole t.-Butanol oder i.-Butanol in einer Menge von 0,1 bis 5 Gew.%, bezogen auf das Gewicht der Komponente b) verwendet.

**Claims**

1. A process for strengthening geological formations in underground mining or in civil engineering by introducing into the formation which is to be strengthened reaction mixtures consisting of a polyisocyanate component a), a polyol component b) and optionally auxiliary agents and additives which react together to form polyurethanes, characterized in that as the polyol component b) there are used blends comprising (i) organic polyhydroxyl compounds having hydroxyl values of from 100 to 800 and (ii) monohydric alcohols having molecular weights in the range of from 32 to 600, the amount of component (ii) being from 0,01 to 20 % by weight, based on the total component b).

2. The process according to claim 1, characterized in that tert.-butanol or iso-butanol in amount of from 0,1 to 5 % by weight, based on the weight of the component b) is employed as the monohydric alcohol.

**Revendications**

1. Procédé de consolidation de formations géologiques au cours de travaux miniers souterrains ou de travaux du génie civil par l'incorporation, à la formation à consolider, de mélanges réactionnels réagissant en polyuréthannes, qui se composent d'un composant du type polyisocyanate a) d'un composant du type polyol b) et éventuellement d'adjuvants et d'additifs c), caractérisé en ce que l'on utilise, à titre de composant du type polyol b) des mélanges de (i) des composés polyhydroxylés organiques d'une plage d'indices d'hydroxyle de 100 à 800 et (ii) d'alcools monohydroxylés d'un poids moléculaire de 32 à 600, où la proportion du composant (ii) atteint de 0,01 à 20 % en poids par rapport au composant total b).

2. Procédé suivant la revendication 1, caractérisé en ce que l'on utilise, à titre d'alcool monohydroxylé, le t.-butanol ou le i.-butanol en une proportion de 0,1 à 5 % en poids, par rapport au poids du composant b).